# EUROPEAN PATENT APPLICATION

(11) **EP 1 280 148 A2**
(43) Date of publication of application: **29.01.2003**
(21) Application number: 01202863.5
(22) Date of filing: 26.07.2001
(51) Int. Cl.: G11B 20/00

(54) **Compilation technique and data distribution system using the same**

(71) Applicant: Irdeto Access B.V., 2132 HD Hoofddorp (NL)
(72) Inventor: Wajs, Andrew Augustine, 2023 AA Haarlem (NL)
(74) Representative: de Vries, Johannes Hendrik Fokke

(57) **Abstract**

A method for producing a plurality of secure original copies of software from a single master source code (1), wherein each original copy is provided with means for preventing generation of functioning copies from the original copies, comprises generating each original copy or a group of original copies as an executable binary file (2-6; 24) with different actual file contents.

A system for secure distribution of content data (20), comprises means (10, 13; 14, 15) for distributing copies (22) of the content data (20), a programmable processing device (12; 16, 19) and a computer (11, 18) with compiler software for generating access software that can be loaded onto the programmable processing device (12; 16, 19). The programmable processing device (12; 16, 19), when running the access software, is capable of making the content data (20) available. The computer (11, 18) with compiler software is capable of generating the access software as an executable binary file (2-6; 24) using the above-mentioned method.

## Description

### Background of the invention

The invention relates to a method for producing a plurality of secure original copies of software from a single master source code, wherein each original copy is provided with means for preventing generation of functioning copies from the original copies.

The invention further relates to a system for secure distribution of content data, comprising means for distributing copies of the content data, a programmable processing device and a compiler capable of generating access software which can be loaded onto the programmable processing device, wherein the programmable processing device, when running the access software, is capable of making the content data available.

Known methods of the above-mentioned kind use techniques to prevent a licensed recipient of an original copy of a piece of software from making unauthorised further copies and distributing these. Such techniques often involve a copy protection module in the software that requires the licensed recipient to enter a license key or they involve software modules that limit the use of the installed software to a specific time period.

Through a determined analysis of an original copy of the software, software modules providing copy protection or limiting use of the installed software to a specific time period can often be identified within the program code. Once identified it becomes possible to remove such a module from the code or disable it and distribute versions of the original software without the software module or with the copy protection features disabled.

Some application developers provide their code with integrity checking modules or structure their codes in an obscure manner. This will make analysis more difficult, but it is still possible to find such modules or see through the obscure code, if enough effort and time is put into the analysis.

Once someone has found out how to disable the copy protection features of one original copy of the software, he can make his knowledge available to other users of licensed original copies, enabling them to also make unlicensed further copies. Often, this knowledge is made available in the shape of a 'patch', a piece of software to disable the copy protection features in licensed original copies of a vendor's software. If a patch for a computer program is posted on the Internet, the economic damage to the developers and vendors of the original program will be considerable.

Known systems of the above-mentioned kind rely on the copy protection features discussed above to prevent unlicensed copies of the access software from circulating. By structuring the content data in such a way that it can only be made available by running the access software, one tries to make the distribution system secure, so that only licensed users can gain access to the content data.

### Summary of the invention

The method according to the invention provides better protection against the spread or organised distribution of unauthorised copies of original copies of software. The method comprises generating each original copy or a group of original copies as an executable binary file with different actual file contents. Thus, any patch developed on the basis of one licensed original copy will not work on other licensed original copies.

The system according to the invention is characterised in that the compiler is capable of generating the access software as an executable binary file using a method according to any one of claims 1-7. Thus, since the content data is only accessible by running the access software and the spread of unauthorised copies of the access software is prevented, access to the content data can be restricted to a select group of persons.

### Brief description of the drawings

The invention will now be explained in further detail with reference to the accompanying drawings of which
Fig. 1 schematically shows how unique executable binary files are generated from a single master source code in an embodiment of the method according to the invention;
Fig. 2 schematically shows an embodiment of a system according to the invention;
Fig. 3 schematically shows the basic configuration of a pay-TV broadcast system as another example of a system according to the invention;
Fig. 4 schematically illustrates the generation of access software and content data in an embodiment of a system according to the invention.

### Detailed description of the preferred embodiments

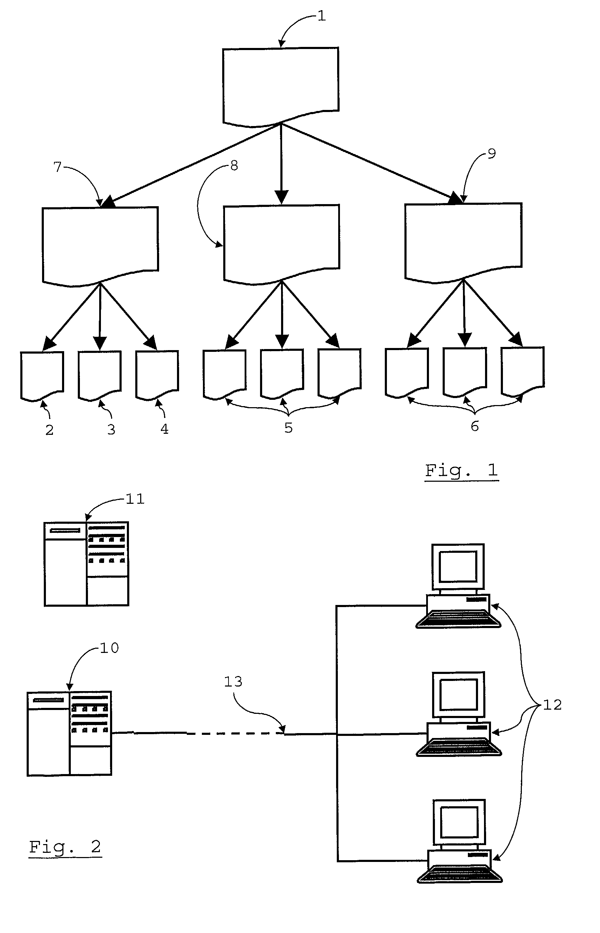

Fig. 1 illustrates the generation of executable binary files with different actual file contents using an embodiment of the method according to the invention. An application programmer using the method starts by writing a master source code 1. This code can be written in any higher level programming language, for instance C++, Java®, Pascal, or Fortran. The master source code 1 provides the functionality of the application. For instance, if the application is a word processor, the master source code 1 will comprise all the code needed to compile a functioning word processing program.

A compiler can translate the master source code 1, written in a higher level programming language, into an executable binary file 2-6, comprising instructions at machine-level, which are specific to the system on which the software is to be run. Licensed users each receive one original copy of an executable binary file.

Using the method according to the invention, users can be prevented from using the software outside the terms of the license. For instance, trial versions can be distributed, of which the use is restricted to a limited period of time. Using the method according to the invention, the software cannot be run after this period of time has expired.

The method according to the invention prevents the generation of unauthorised copies from a licensed original copy. The master source code 1 additionally comprises one or more modules that ensure that unauthorised further copies of an original licensed copy will not function. Such modules can, for instance, make use of license keys or hardware recognition. In the former case, a license key, provided separately by the application programmer, is needed to successfully install and run a copy of executable binary file 2-6. In the latter case, copies will only run on one machine or only on machines with identical components. Several other measures, known per se, exist whereby the generation of functioning copies of licensed original copies of software are prevented. All of these can be employed in the method according to the invention.

Given enough time and effort, it is possible, in principle, to identify the modules in the software that prevent generation of functioning copies of the licensed original copies of executable binary files 2-6. Once they have been identified, add-on software, so-called patches, can be developed which disable these protective features. Of course, to do so by analysis of the executable binary files 2-6 is time-consuming and only worth the effort if the patch can afterwards be distributed to other owners of licensed original copies who wish to generate functioning unauthorised copies. The method according to the invention prevents this, by generating each original copy or a group of original copies as an executable binary file 2-6 with different actual file contents.

The generation of the executable binary files 2-6 is performed by a special compiler program, which compiles source code in different ways to generate a plurality of different executable binary files, with the same functionality and different actual file contents. This means that one source code can lead to a number of different executable binary files, depending on the way the compiler selects to compile it. The actual file contents, basically the composition of the file in terms of its bits, are different for each file. A part of the code will not be in the same location in every file. However, when run, the executable binary files 2-6 will all function in exactly the same way, so it is not possible to tell the difference between the files 2-6 by running them.

If a very large group of secure original copies is to be generated, it would suffice to generate groups of executable binary files with different actual file contents. This is an equally adequate way of preventing the use of patches, since it would not be practically feasible to select a subset of identical binary files, on which a patch might work, from the larger set of original copies.

One way of generating a plurality of different executable binary files 2-6 from a single source code version, is to implement a function or method in the source code by a different algorithm for each executable binary file 2-6. For example, *e*²^{*x*} can be calculated in several different ways. It is possible to first calculate *y*=2·*x* and then calculate *e*^{*y*}. It is also possible to first calculate *z*=*e*^{*x*} and then calculate *z*². The same principle holds for other functions, like 'FOR'-loops, 'CASE-statements, etc. The compiler selects different algorithms or a different combination of algorithms to map such functions to machine code, each time an executable binary file 2-6 is generated.

Another way of generating a plurality of different executable binary files 2-6 from a single source code version, is to use a different memory map for the data structures defined in the source code for each of the executable binary files 2-6. Such data structures are, for example, arrays, objects and strings. The values contained in these structures are distributed differently over the available memory locations for each of the executable binary files 2-6 generated in this way, when the file is executed.

In a preferred embodiment of the method according to the invention, the way in which to compile the source code is chosen at random. In this way, it becomes impossible to predict the actual file contents of the executable binary files 2-6 that are generated next by the compiler. The serial number of the software as comprised by the file, for instance, will bear no relation to the way in which it has been compiled.

In an advantageous embodiment of the invention, different source code modules are added to the master source code 1 in order to generate a plurality of different versions 7-9 of compilable source code. In this respect, it is noted that, in the present application, the word compilable is used merely to distinguish this code from the master source code 1. The master source code 1 can, of course, also be compiled.

One use for this embodiment is to generate executable binary files for use under different license terms. For example, a first version 7 of compilable source code can comprise a source code module that limits the use of the executable binary files 2-4 generated from it to a certain period of time. Alternatively, the different versions 7-9 of compilable source code can comprise different protective features.

In these cases, the functionality of the different copies of the software is, of course, slightly different, though only in so far as the security features are concerned. It is also conceivable within the scope of the invention to use different source code modules for procedures or methods in the core application. For example, where a procedure involves a number of steps, different source code modules, each programming the steps to be carried out as part of a procedure in a different order, can be used for each of the different versions 7-9 of compilable source code.

Different versions of compilable source code are also generated when the different source code modules comprise data including an identification code and an encryption key. Such would be the case when a license key is required to successfully install and/or run a copy of the software.

A version 8 of compilable source with a first identification code and encryption key is not identical to a version 9 of compilable source code with a second identification code and encryption key. Executable binary files 5 generated from the version 8 with the first identification code and encryption key are each different, as are binary files 6 generated from the version 9 with the second identification code and encryption key. Someone in possession of the key, identification code and one of the files 5 generated from the first version could manage to find out how and where the key and identification code are stored in his file. A patch to retrieve the key and identification code from this executable binary file patch will not, however, work on the executable binary files 6 with the second identification code and encryption key. This code and key are not encoded in the same way or in the same part of the files 6.

By both generating different versions 7-9 of compilable source code from the master source code 1 and generating different executable binary files 2-4 from a single version 7 of compilable source code, the number of different executable binary files 2-6 derived from the master source code 1 is greatly extended, as can be seen from Fig. 1.

In an advantageous embodiment of a system according to the invention, a record is kept of the different executable binary files 2-6 generated. Thus, illegal copies and patches can be traced back to an original and the person to whom the original copy was supplied.

Fig. 2 shows an embodiment of a system according to the present invention. The system comprises a data server 10, containing content data. This can be a video clip, audio files, or any other kind of meaningful content data.

The system also comprises a computer 11 that has compiler software installed on it. By running the compiler software, the computer is capable of generating access software. In this compilation process, the method according to the invention is used. The executable binary files comprising the access software are made available on data carriers, not shown, e.g. floppy disks or CD's. In an alternative embodiment, the compiled access software can be made available for download, from the computer 11 on which it has been compiled, the data server 10, or any other computer in a network.

The system further comprises a number of computers 12, connected to the data server 10 through a network 13. Copies of the content data on the data server 10 are to be distributed to the computers 12. Those computers authorised to provide access to the content data have had copies of the access software loaded onto them.

For example, the content data can comprise audio files, compressed according to a certain standard. The access software is capable of making the content data available by decompressing the compressed audio files and controlling a sound card in one of the computers 12 which plays the music contained in the audio file. Only those computers with the right access software are capable of making the content data available.

In an alternative embodiment, the software comprises at least part of the content data. This means only one file need be downloaded from the data server 10 onto one of the computers 12. Alternative embodiments are conceivable, wherein the access software comprises some content data to enable users to try it out. Further content data is then subsequently downloaded from the data server 10 onto one of the computers 12 and made available by running the previously downloaded access software.

It is advantageous to rapidly develop new versions of the access software or limit the functioning of the software to a certain time period. This makes frequent updating of the software on the computers 12 necessary. The structure of the actual file contents of the executable binary files (2-6) is different for each file. Development of patches thus becomes a futile exercise, since a developed patch cannot be adapted to an updated version of the access software without a complete analysis of this updated version.

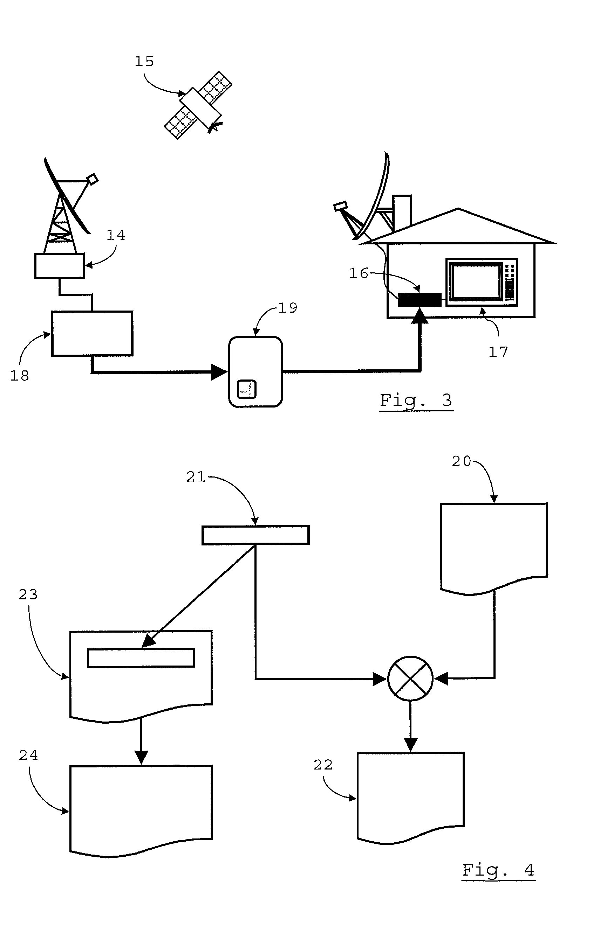

Fig. 3 schematically shows the main elements of another embodiment of a system according to the invention, this time a pay-TV system. The content data in this system comprises video data, which is to be distributed to subscribers in a secure manner. The elements shown in Fig. 3 are a broadcast station 14, a satellite link 15 and a set-top box 16 and TV 17 in the subscriber's home. Of course, other pay-TV systems, which make use of cable networks or videos for distributing programs, are also covered by the invention. The system of Fig. 3 serves merely as an example. The subscriber could also be provided with the video data through a PC, connected to the Internet or comprising a TV tuner card.

The organisation distributing the content data has a computer at its disposal running compiler software that can compile access software using a method according to the invention. The computer with compiler software is symbolically depicted and referred to by reference numeral 18 in Fig. 3.

Access software, which can be loaded and run on a programmable processing device like the set-top box 16, is available to the subscriber. The video data is sent from the broadcast station 14 through the satellite link 15 to the subscriber. The access software, running on the set-top box 16 is capable of making the content data available in a format suitable for display on the TV 17.

In the preferred embodiment, the content data is encrypted and the set-top box 16 running the access software is capable of decrypting the video data sent to it through the satellite link 15.

Because anyone can pick up the content data sent through the satellite link 15, the access software are the means by which the broadcaster can restrict access to the data to licensed subscribers. It is therefore essential that licensed subscribers do not generate unlicensed further copies of the original copy of the access software, which they have received as part of their subscription. In the system of the invention, this is achieved by making the access software available to subscribers in the shape of executable binary files generated using the compilation method of the present invention, as described above.

In the system shown, the access software is installed separately on the set-top box 16. It can have been made available as firmware in the set-top box 16, on a memory card, a CD or magnetic storage medium, for example. In another favourable embodiment, the access software is downloadable, either directly through the satellite link 15, or indirectly, through a network onto a computer, from whence it can be loaded onto the set-top box 16. If the software is downloadable, new versions can be made available at short intervals, adding an extra security feature to the system. In addition, the access software can even comprise part or all of the content data, useful when offering trial subscriptions, for instance.

In an alternative embodiment of the invention, also schematically shown in Fig. 3, at least part of the access software is made available by means of a smart card 19. The smart card 19 comprises at least permanent and/or rewritable memory and a processor. Depending on the size and complexity of the software, part or all of the access software is loaded into the memory of the smart card 19.

In particular, the access software on the smart card 19 can comprise key-handling software and one or more keys. These will usually be master keys, intended for use over a certain period of time. When the smart card 19 is connected to the set-top box 16, the access software on the smart card 19 makes the key - or derivatives of the key - available to the set-top box 16.

The system according to the invention comprises embodiments, wherein the access software comprises a master key. Minor keys are derived at certain intervals by the processor on the smart card 19 or by a processor in the set-top box 16, by decrypting messages from the broadcaster that have been encrypted using the master key, or a complementary key, and contain minor or session keys. These minor keys are then made available to the decryption engine in the set-top box. In such embodiments of the system, the video data broadcast by the broadcast station is encrypted using varying keys that are complementary or identical to the minor keys generated by the access software on the smart card.

In an advantageous embodiment of the invention, the smart card 19 comprises rewritable memory and part or all of the access software is changed after a period of time. New versions of the access software, compiled using the method of the invention, can then be downloaded onto the smart card 19. This makes the distribution system more secure, because any patches developed for one of the executable binary files then become useless. The newly downloaded software would have to be completely re-analysed to develop a new patch, since the structure of the actual file contents of the new executable binary file is different from that of the old version of the access software.

Fig. 4 schematically shows how the content data and access software are generated using the method according to the invention. Video data 20 is encrypted using an encryption algorithm and an encryption key 21. The invention is not limited to any particular encryption algorithm, but in this particular embodiment, it has to be one that relies on a key, which is unique to a particular user or group of users. Thus, encrypted content data 22 is generated, which can be distributed to the subscribers through the satellite link 15.

A master source code, not shown, comprises an algorithm enabling decryption of the encrypted content data 22. This can be a key-handling algorithm, if the access software is intended for the smart card 19, or it can be the complete decryption algorithm, if it is intended for the set-top box. Through the addition of the encryption key 21, or a complementary decryption key, if the two keys are not the same, to the master source code as a source code module, compilable source code 23 is generated. Different keys can be used for different (groups of) subscribers, so the compilable source code 23 is one of a plurality of different versions, each derived from the same master source code.

Next, the compilable source code 23 is compiled using the method according to the invention. This results in an executable binary file 24, which can be distributed to the subscribers.

The compilation can comprise one or all of the features of the method as previously described. For instance, decryption functions can be implemented by different algorithms for each executable binary file 24 generated. A variable used in the decryption process can be differently structured in each executable binary file. The system can be made even more secure by using a randomising function to randomly select the way in which the actual file contents of each executable binary file are generated.

It will be apparent that the invention is not limited to the above-described embodiments, which can be varied within the scope of the claims. Notably, other systems according to the invention can be conceived that combine elements from the systems of Fig. 2 and Fig. 3, so that access software for the pay-TV system is downloadable through a computer network, for instance.

## Claims

1. Method for producing a plurality of secure original copies of software from a single master source code (1), wherein each original copy is provided with means for preventing generation of functioning copies from the original copies, **characterised by** generating each original copy or a group of original copies as an executable binary file (2-6; 24) with different actual file contents.

2. Method according to claim 1, wherein a single version of compilable source code (7; 23) is compiled in different ways to generate a plurality of executable binary files (2-4; 24) with different actual file contents.

3. Method according to claim 2, wherein a function in the compilable source code (7) is implemented by a different algorithm for each executable binary file (2-4).

4. Method according to claim 2 or 3, wherein a different memory map is used for data structures defined in the compilable source code (7) for each executable binary file (2-4).

5. Method according to any one of claims 2-4, wherein the way in which each executable binary file (2-6; 24) is generated, is selected at random.

6. Method according to any of the preceding claims, wherein different source code modules (21) are added to the master source code (1) in order to generate a plurality of different versions (7-9, 23) of compilable source code.

7. Method according to claim 6, wherein the different source code modules (7-9) comprise data including an identification code and an encryption key (21).

8. System for secure distribution of content data (20), comprising means (10, 13; 14, 15) for distributing data (22), a programmable processing device (12; 16, 19) and a computer (11, 18) with compiler software for generating access software that can be loaded onto the programmable processing device (12; 16, 19), wherein the programmable processing device (12; 16, 19), when running the access software, is capable of making the content data (20) available, **characterised in that** the computer (11, 18) with compiler software is capable of generating the access software as an executable binary file (2-6; 24) using a method according to any one of claims 1-7.

9. System according to claim 8, wherein the access software comprises at least part of the content data (20).

10. System according to claim 8 or 9, comprising means for encrypting the content data (20), wherein the programmable processing device (12; 16, 19), when running the access software, is capable of enabling decryption of the encrypted content data (22).

11. System according to claim 10, wherein the access software comprises at least one key for use in decrypting the encrypted content data (22).

12. System according to any one of claims 8-11, further comprising a communications channel (13; 14, 15), connected to the programmable processing device (12; 16, 19), wherein the access software and/or the content data are transferred to the programmable programming device (12; 16, 19) through the communication channel (13; 14, 15).

13. Smart card (19) comprising memory in which is loaded at least part of the access software so that the smart card (19) constitutes a programmable processing device in a system according to any one of claims 8-12.

14. Compiler software suitable for loading onto a computer (11), so that when run, the computer (11) performs a method according to any one of claims 1-7.
